# EUROPÄISCHE PATENTSCHRIFT

(11) **EP 1 663 750 B1**
(45) Veröffentlichungstag und Bekanntmachung des Hinweises auf die Patenterteilung: **20.02.2008**
(21) Anmeldenummer: 04763858.0
(22) Anmeldetag: 06.08.2004
(51) Int. Cl.: B61D 3/10, B62D 47/02

(54) **GROSSRÄUMIGES FAHRZEUG ZUR PERSONENBEFÖRDERUNG, INSBESONDERE SCHIENENFAHRZEUG, MIT GELENKIG VERBUNDENEN WAGENKÄSTEN**
LARGE-CAPACITY VEHICLE FOR TRANSPORTING PEOPLE, ESPECIALLY A RAIL VEHICLE, COMPRISING CARRIAGES THAT ARE CONNECTED IN AN ARTICULATED MANNER
VEHICULE DE GRANDE CAPACITE SERVANT AU TRANSPORT DE PERSONNES, NOTAMMENT VEHICULE FERROVIAIRE, COMPRENANT DES CAISSES ARTICULEES

(30) Priorität: 19.09.2003 DE 10343536
(43) Veröffentlichungstag der Anmeldung: 07.06.2006
(73) Patentinhaber: SIEMENS AKTIENGESELLSCHAFT, 80333 München (DE)
(72) Erfinder: ALBERT, Volker, 47803 Krefeld (DE); BERNARD, Paul, 40223 Düsseldorf (DE); SCHILLINGS, Dirk, 41472 Neuss (DE)
(86) Internationale Anmeldenummer: PCT/EP2004/008823
(87) Internationale Veröffentlichungsnummer: WO 2005/037621

(56) Entgegenhaltungen:
- EP-A- 0 562 598
- DE-U- 29 707 031
- DE-U- 29 803 504
- FR-A- 1 539 860
- US-A- 5 052 707

## Beschreibung

Die Erfindung betrifft ein großräumiges Fahrzeug zur Personenbeförderung, insbesondere Schienenfahrzeug, das durch untere Gelenkverbindungen und durch obere Gelenkverbindungen gekoppelte Wagenkästen aufweist, von denen wenigstens zwei Wagenkästen jeweils auf einem Drehgestell oder Fahrwerk abgestützt sind, wobei sowohl die unteren Gelenkverbindungen als auch die oberen Gelenkverbindungen bei Kurvenfahrt Wendebewegungen der Wagenkästen um die Hochachse zulassen und bei einem mehr als dreiteiligen Fahrzeug zumindest eine obere Gelenkverbindung derart ausgebildet ist, dass das Fahrzeug bei Mulden- oder Kuppenfahrt Nickbewegungen um die Querachse ausführen kann.

Ein Fahrzeug, bei dem zwei miteinander verbundene Teile sowohl Wendebewegungen um die Hochachse als auch Nickbewegungen um die Querachse ausführen können, ist aus der US 5 052 707 A bekannt. Die dort beschriebene Vorrichtung zum Verbinden der beiden Wagenteile sieht Vorrichtungen vor, die Drehbewegungen um die Längsachse des Fahrzeuges gezielt verhindern.

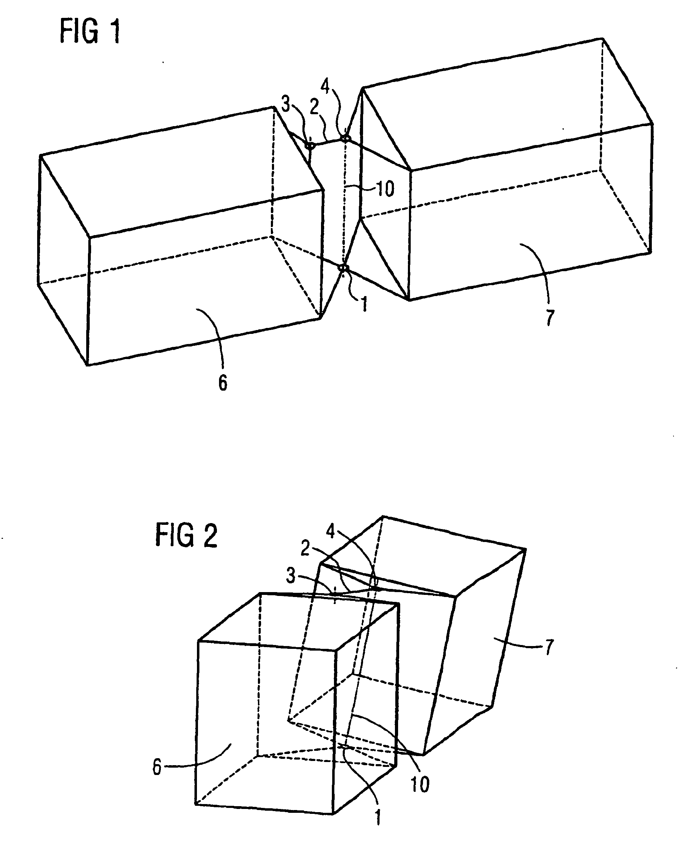

In der Zeitschrift Der Nahverkehr, Nr. 6/1996, Seiten 48 bis 53, ist ein innovatives Rohbaukonzept für ein modulares Straßenbahnfahrzeug beschrieben. Bei dem in Abb. 2 dieser Literaturstelle gezeigten vierteiligen Prototyp-Fahrzeug ist ein brückenartig gestalteter Wagenkasten (Mittelmodul) gelenkig mit zwei Wagenkästen verbunden, die jeweils auf einem zweiachsigen Fahrwerk abgestützt sind (zweiachsige Fahrwerkmodule). Das Prototyp-Fahrzeug hat weiter einen Wagenkasten, der auf einem einachsigen Fahrwerk ruht (einachsiges Fahrwerkmodul). Die unteren Gelenkverbindungen umfassen sphärisch bewegliche Fahrzeuggelenke, die über Konsolen mit den wagenkästen starr verbunden sind. Diese unteren Gelenke, die als Baugruppe beispielsweise durch die DE 101 39 970 A1 bekannt sind, lassen Schwenkbewegungen und prinzipiell auch Nicksowie Wankbewegungen zu. Die beim Prototyp-Fahrzeug zwischen dem Mittelmodul und den beiden zweiachsigen Fahrwerkmodulen angeordnete erste Ausführung der oberen Gelenke lässt lediglich eine Schwenkbewegung um die Hochachse (z-Achse) zu. Eine beim Prototypen zwischen dem Wagenkasten mit dem einachsigen Fahrwerkmodul und dem Mittelmodul angeordnete zweite Ausführung des oberen Gelenks erlaubt dem Fahrzeug beim Durchfahren einer Mulde bzw. Kuppe auch eine Nickbewegung um die Querachse. Bei dieser zweiten Gelenkausführung sind die Wagenkästen über einen Querlenker verbunden, der an einer jeweiligen Konsole beider Wagenkästen angreift.

Bei dem zuvor erläuterten modularen Fahrzeug und auch bei anderen sogenannten Multigelenkfahrzeugen - siehe dazu in der Zeitschrift Railway Gazette 2003, Seiten 57 bis 64, beispielsweise Fig. 4 "Dresden NGTD 6", Fig. 6 "Citadis" und Fig. 7 "Cityrunner" - werden also Gelenke eingesetzt, die entweder nur ein Schwenken der Wagenkästen um die Hochachse oder ein Schwenken und Nicken der Wagenkästen um die Hochachse bzw. um die Querachse zulassen. Bei bestimmten Gleissituationen (wie insbesondere Gleisüberhöhungen in Kurven oder Gleisverwindungen) kommt es zu einer Torsion der Wagenkästen mit der Folge hoher Beanspruchungen der Struktur der Wagenkästen. Wenngleich die Wagenkästen im Hinblick auf diese hohen Beanspruchungen dimensioniert sind, sind Überlastungen und Beschädigungen der Wagenkastenstrukturen im Fahrbetrieb nicht auszuschließen.

Der Erfindung liegt daher die Aufgabe zugrunde, ein großräumiges Fahrzeug mit den gattungsgemäßen Merkmalen auf möglichst einfache Weise so auszubilden, dass bei allen Gleissituationen Überlastungen und Beschädigungen der Wagenkastenstrukturen sicher vermieden sind.

Diese Aufgabe wird erfindungsgemäß dadurch gelöst, dass eine der oberen Gelenkverbindungen ein Verbindungselement aufweist, das derart ausgebildet und an zwei Wagenkästen angeschlossen ist, dass Schwenk- und Wankbewegungen um die Fahrzeuglängsachse ermöglicht sind.

Das Verbindungselement kann als starre Lenkerstange ausgebildet und über Kugelgelenke mit den beiden Wagenkästen verbunden sein. Alternativ ist es möglich, das Verbindungselement als tordierbare Lenkerstange auszubilden und über einachsige Gelenke mit den beiden Wagenkästen zu verbinden.

Da nach der Erfindung eine der Gelenkverbindungen eine Schwenk- und Wankbewegung der Wagenkästen zulässt, tritt vorteilhaft keine torsionale Beanspruchung der Wagenkästen auf, die Beschädigungen hervorrufen könnte.

Vorteilhafte Ausgestaltungen der Erfindung sind in den Unteransprüchen angegeben.

Im Weiteren wird die Erfindung anhand von Ausführungsbeispielen näher beschrieben, die in der Zeichnung jeweils prinzipartig dargestellt sind.

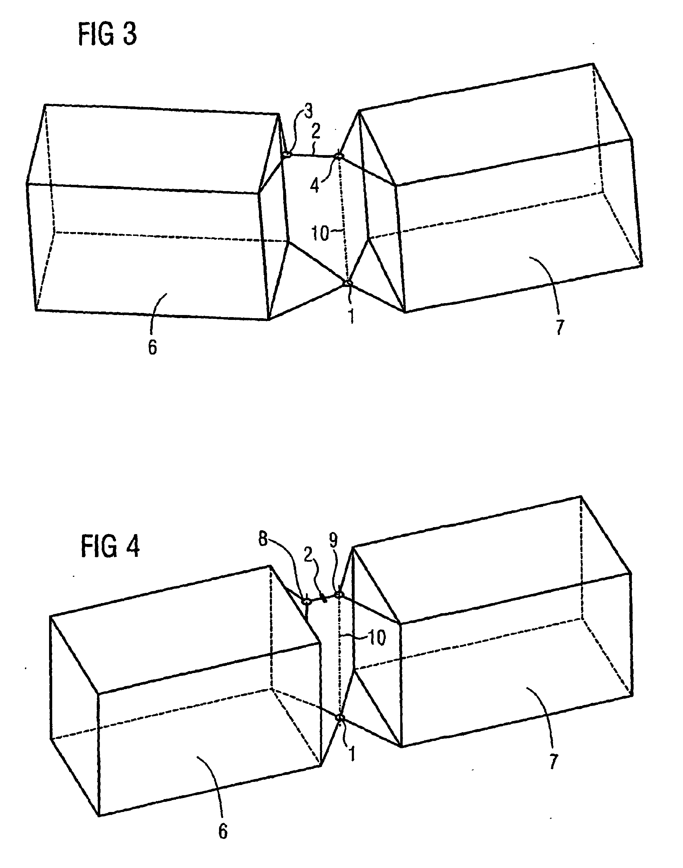

Die Fig. 1 bis 3 zeigen zwei Wagenkästen eines Schienenfahrzeuges mit einer ersten Ausführungsform der erfindungsgemäßen Gelenkverbindung, wobei Fig. 1 die Neutralstellung, Fig. 2 eine reine Wankbewegung und Fig. 3 eine reine Schwenkbewegung veranschaulichen.

Fig. 4 zeigt zwei Wagenkästen eines Schienenfahrzeuges mit einer zweiten Ausführungsform der erfindungsgemäßen Gelenkverbindung in Neutralstellung.

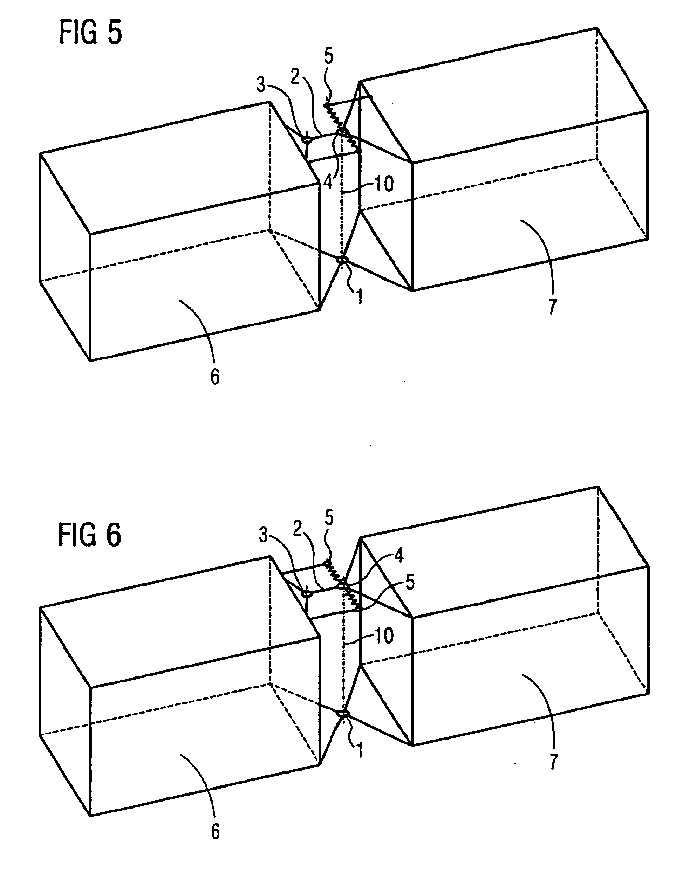

In den Fig. 5, 6 und 7 sind am Beispiel der ersten Ausführungsform der Gelenkverbindung nach Fig. 1 jeweils unterschiedliche Ausbildungen und Anordnungen eines Bauteils zum Begrenzen der Wankbewegungen dargestellt.

Die Wagenkästen 6, 7 sind vorzugsweise Bestandteile eines modular gestalteten Schienenfahrzeuges, das z. B. insgesamt drei, fünf oder mehr Wagenkästen aufweist. Der Wagenkasten 6 kann auf einem Drehgestell oder Fahrwerk abgestützt sein, während der Wagenkasten 7 brückenartig ausgebildet und durch den abgestützten Wagenkasten 6 und einen weiteren abgestützten Wagenkasten (6) getragen wird, der in Zeichnungsebene der Fig. 1 bis 7 rechts neben dem brückenartigen Wagenkasten 7 angeordnet ist. Es ist jedoch auch denkbar, alle Wagenkästen auf Drehgestellen oder Fahrwerken abzustützen.

Alle Wagenkästen des mehrteiligen Schienenfahrzeuges sind durch Gelenkverbindungen gekoppelt, die bei Kurvenfahrt Wendebewegungen der Wagenkästen um die Hochachse zulassen. Bei einem mehr als dreiteiligen Schienenfahrzeug ist zumindest eine Gelenkverbindung derart ausgebildet, dass das Fahrzeug bei Mulden- oder Kuppenfahrt Nickbewegungen um die Querachse ausführen kann. Um zusätzlich Wankbewegungen der Wagenkästen 6, 7 um die Fahrzeuglängsachse zu ermöglichen, weist die gezeigte Gelenkverbindung ein Verbindungselement 2 auf, das gemäß den Fig. 1 bis 3 sowie 4 bis 7 als starre Lenkerstange ausgebildet und über Kugelgelenke 3, 4 mit den beiden Wagenkästen 6, 7 verbunden ist. Bei der aus Fig. 4 ersichtlichen alternativen Ausführung ist das Verbindungselement 2 als tordierbare Lenkerstange ausgebildet und über einachsige Gelenke 8, 9 mit den beiden Wagenkästen 6, 7 verbunden. Im unteren Bereich sind die Wagenkästen 6, 7 durch ein sphärisch bewegliches Fahrzeuggelenk 1 gekuppelt. Eine der durch die Kugelgelenke 3, 4 bzw. durch die einachsigen Gelenke 8, 9 gebildeten Drehachsen und die Drehachse des Fahrzeuggelenks 1 liegen bevorzugt in derselben Vertikalachse 10. Dadurch ist ein einwandfreies Schwenken um die Hochachse möglich.

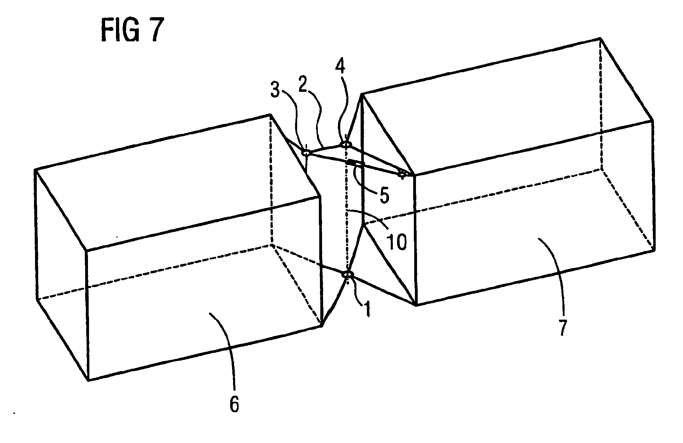

Die Wankbewegung ist grundsätzlich durch die Länge des Verbindungselements 2 begrenzt. Es empfiehlt sich allerdings, die Wankbewegungen durch ein Bauteil 5 zu begrenzen, das eine dämpfende Funktion hat und die Funktion eines Anschlages beinhaltet. Außerdem kann das Bauteil 5 eine federnde Funktion aufweisen. Gemäß Fig. 5 greift das Bauteil 5 an den beiden Wagenkästen 6, 7 an. Entsprechend Fig. 6 und 7 kann das Bauteil 5 auch so angeordnet sein, dass es einerseits an einem der Wagenkästen 6, 7 und andererseits an einem der Kugelgelenke 3, 4 angreift. Die in den Fig. 5 bis 7 gezeigten Anordnungen des die Wankbewegungen begrenzenden Bauteils 5 sind ohne weiteres auf die in Fig. 4 dargestellte zweite Ausführungsform der erfindungsgemäßen Gelenkverbindung übertragbar.

## Patentansprüche

1. Großräumiges Fahrzeug zur Personenbeförderung, insbesondere Schienenfahrzeug, das durch untere Gelenkverbindungen (1) und durch obere Gelenkverbindungen gekoppelte Wagenkästen (6, 7) aufweist, von denen wenigstens zwei Wagenkästen (6, 7) jeweils auf einem Drehgestell oder Fahrwerk abgestützt sind, wobei sowohl die unteren Gelenkverbindungen (1) als auch die oberen Gelenkverbindungen bei Kurvenfahrt Wendebewegungen der zwei Wagenkästen (6, 7) um die Hochachse zulassen und bei einem mehr als dreiteiligen Fahrzeug zumindest eine obere Gelenkverbindung derart ausgebildet ist, dass das Fahrzeug bei Mulden- oder Kuppenfahrt Nickbewegungen der zwei Wagenkästen um die Querachse ausführen kann,
**dadurch gekennzeichnet, dass**
diese obere Gelenkverbindung ein Verbindungselement (2) aufweist, das derart ausgebildet und an den zwei Wagenkästen (6, 7) angeschlossen ist, dass Schwenk- und Wankbewegungen um die Fahrzeuglängsachse ermöglicht sind.

2. Großräumiges Fahrzeug nach Anspruch 1,
**dadurch gekennzeichnet, dass**
das Verbindungselement (2) der oberen Gelenkverbindung als starre Lenkerstange ausgebildet und über Kugelgelenke (3, 4) mit den beiden Wagenkästen (6, 7) verbunden ist.

3. Großräumiges Fahrzeug nach Anspruch 1,
**dadurch gekennzeichnet, dass**
das Verbindungselement (2) der oberen Gelenkverbindung als tordierbare Lenkerstange ausgebildet und über einachsige Gelenke (8, 9) mit den beiden Wagenkästen (6, 7) verbunden ist.

4. Großräumiges Fahrzeug nach Anspruch 2 oder 3,
**dadurch gekennzeichnet, dass**
eine der durch die Kugelgelenke (3, 4) bzw. durch die einachsigen Gelenke (8, 9) der oberen Gelenkverbindung gebildeten Drehachsen und die Drehachse des unteren, mit Höhenabstand mittig zwischen den Wagenkästen (6, 7) angeordneten sphärisch beweglichen Fahrzeuggelenks (1) in derselben Vertikalachse (10) liegen.

5. Großräumiges Fahrzeug nach einem der Ansprüche 1 bis 4,
**dadurch gekennzeichnet, dass**
die Wankbewegungen durch ein Bauteil (5) begrenzt sind, das eine dämpfende Funktion aufweist.

6. Großräumiges Fahrzeug nach Anspruch 5,
**dadurch gekennzeichnet, dass**
das Bauteil (5) die Funktion eines Anschlags beinhaltet.

7. Großräumiges Fahrzeug nach Anspruch 5 oder 6,
**dadurch gekennzeichnet, dass**
das Bauteil (5) eine federnde Funktion hat.

8. Großräumiges Fahrzeug nach einem der Ansprüche 5 bis 7,
**dadurch gekennzeichnet, dass**
das die Wankbewegungen begrenzende Bauteil (5) an den beiden Wagenkästen (6, 7) angreift.

9. Großräumiges Fahrzeug nach einem der Ansprüche 5 bis 7,
**dadurch gekennzeichnet, dass**
das die Wankbewegungen begrenzende Bauteil (5) einerseits an einem der Wagenkästen (6, 7) und andererseits an einem der Kugelgelenke (3, 4) bzw. einem der einachsigen Gelenke (8, 9) angreift.

## Claims

1. Large-capacity vehicle for transporting people, especially a rail vehicle, which has car bodies (6, 7) which are coupled by lower articulated connections (1) and by upper articulated connections, at least two car bodies (6, 7) of which are respectively supported on a bogie or set of running gear, wherein both the lower articulated connections (1) and the upper articulated connections permit turning movements of the two car bodies (6, 7) about the vertical axis when cornering, and in a vehicle which has more than three parts at least one upper articulated connection is embodied in such a way that the vehicle can carry out pitching movements of the two car bodies about the transversal axis when traveling through a depression or over an elevation, **characterized in that** this upper articulated connection has a connecting element (2) which is embodied and connected to the two car bodies (6, 7) in such a way that pivoting and rolling movements about the longitudinal axis of the vehicle are made possible.

2. Large-capacity vehicle according to Claim 1, **characterized in that** the connecting element (2) of the upper articulated connection is embodied as a rigid connector rod and is connected to the two car bodies (6, 7) via ball and socket joints (3, 4).

3. Large-capacity vehicle according to Claim 1, **characterized in that** the connecting element (2) of the upper articulated connection is embodied as a twistable connector rod and is connected to the two car bodies (6, 7) via single-axle joints (8, 9).

4. Large-capacity vehicle according to Claim 2 or 3, **characterized in that** one of the rotational axes which is formed by the ball and socket joints (3, 4) or by the single-axle joints (8, 9) of the upper articulated joint and the rotational axis of the lower vehicle joint (1) which can move in a spherical fashion and is arranged centrally at a vertical distance between the car bodies (6, 7) lie on the same vertical axis (10).

5. Large-capacity vehicle according to one of Claims 1 to 4, **characterized in that** the rolling movements are limited by a component (5) which has a damping function.

6. Large-capacity vehicle according to Claim 5, **characterized in that** the component (5) includes the function of a stop.

7. Large-capacity vehicle according to Claim 5 or 6, **characterized in that** the component (5) has a spring loading function.

8. Large-capacity vehicle according to one of Claims 5 to 7, **characterized in that** the component (5) which limits the rolling movements acts on the two car bodies (6, 7).

9. Large-capacity vehicle according to one of Claims 5 to 7, **characterized in that** the component (5) which limits the rolling movements acts on the car bodies (6, 7) at one end and on one of the ball and socket joints (3, 4) or one of the single-axle joints (8, 9) at the other end.

## Revendications

1. Véhicule de grandes dimensions destiné au transport de personnes, en particulier véhicule sur rails, qui comporte des caisses (6, 7) couplées par des liaisons articulées inférieures (1) et par des liaisons articulées supérieures et dont au moins deux caisses (6, 7) s'appuient chacune sur un bogie ou châssis, les liaisons articulées inférieures (1) aussi bien que les liaisons articulées supérieures permettant que les deux caisses (6, 7) en passant dans les virages exécutent des girations autour de l'axe vertical et, quand le véhicule a plus de trois parties, au moins une liaison articulée supérieure est conçue de telle manière que le véhicule puisse exécuter des mouvements de tangage autour de l'axe transversal lorsque les deux caisses passent dans des creux ou des bosses, **caractérisé en ce que** cette liaison articulée supérieure comporte un élément de liaison (2) conçu et raccordé aux deux caisses (6, 7) de telle manière que des mouvements de pivotement et de roulis soient possibles autour de l'axe longitudinal du véhicule.

2. Véhicule de grandes dimensions selon la revendication 1, **caractérisé en ce que** l'élément de liaison (2) de la liaison articulée supérieure est une bielle rigide et est relié aux deux caisses (6, 7) par des articulations sphériques (3, 4).

3. Véhicule de grandes dimensions selon la revendication 1, **caractérisé en ce que** l'élément de liaison (2) de la liaison articulée supérieure est une bielle susceptible de se tordre et est relié aux deux caisses (6, 7) par des articulations uniaxiales (8, 9).

4. Véhicule de grandes dimensions selon la revendication 2 ou 3, **caractérisé en ce qu'**un des axes de rotation formé par les articulations sphériques (3, 4) ou par les articulations uniaxiales (8, 9) de la liaison articulée supérieure et l'axe de rotation de l'articulation de véhicule (1) inférieure, à mobilité sphérique et disposée au milieu entre les caisses (6, 7) à un niveau différent, se trouvent sur le même axe vertical (10).

5. Véhicule de grandes dimensions selon l'une des revendications 1 à 4, **caractérisé en ce que** les mouvements de roulis sont limités par un composant (5) qui a une fonction d'amortissement.

6. Véhicule de grandes dimensions selon la revendication 5, **caractérisé en ce que** le composant (5) a la fonction d'une butée.

7. Véhicule de grandes dimensions selon la revendication 5 ou 6, **caractérisé en ce que** le composant (5) a une fonction de suspension.

8. Véhicule de grandes dimensions selon l'une des revendications 5 à 7, **caractérisé en ce que** le composant (5) qui limite les mouvements de roulis attaque les deux caisses (6, 7).

9. Véhicule de grandes dimensions selon l'une des revendications 5 à 7, **caractérisé en ce que** le composant (5) qui limite les mouvements de roulis attaque d'une part l'une des caisses (6, 7) et d'autre part l'une des articulations sphériques (3, 4) ou l'une des articulations uniaxiales (8, 9).
